## Europäisches Patentamt

## European Patent Office

## Office européen des brevets

(19)

(11) Veröffentlichungsnummer: **0 129 009**
**B1**

(12) # EUROPÄISCHE PATENTSCHRIFT

(45) Veröffentlichungstag der Patentschrift:
02.09.87

(51) Int. Cl.⁴: **G 01 F 23/22,** G 01 F 23/26

(21) Anmeldenummer: **84103884.7**

(22) Anmeldetag: **07.04.84**

(54) **Einrichtung zum elektrischen Messen eines Flüssigkeitsniveaus.**

(30) Priorität: **15.06.83 DE 3321562**

(43) Veröffentlichungstag der Anmeldung:
**27.12.84 Patentblatt 84/52**

(45) Bekanntmachung des Hinweises auf die Patenterteilung:
**02.09.87 Patentblatt 87/36**

(84) Benannte Vertragsstaaten:
**DE FR GB IT NL SE**

(56) Entgegenhaltungen:
**EP-A-0 019 816**
**DE-A-3 106 969**
**DE-A-3 137 153**
**DE-A-3 235 534**
**FR-A-1 044 570**

(73) Patentinhaber: **VDO Adolf Schindling AG,
Gräfstrasse 103, D-6000 Frankfurt/Main (DE)**

(72) Erfinder: **Kant, Bernhard, Berlinder Strasse 9,
D-6236 Eschborn (DE)**

(74) Vertreter: **Könekamp, Herbert, Dipl.- Ing., Sodener
Strasse 9, D-6231 Schwalbach (DE)**

EP 0 129 009 B1

## Beschreibung

Die Erfindung bezieht sich auf eine Einrichtung zum elektrischen Messen des Niveaus einer in einem Behälter enthaltenen Flüssigkeit mit einer in die Flüssigkeit eingetauchten, von einem Schutzrohr umschlossenen Leiterfolie, wie einer temperaturabhängigen, elektrisch fremd beheizten Widerstandsfolie, deren von einer Auswertschaltung erfaßbarer Gesamtwiderstand von dem Flüssigkeitsniveau in dem Behälter abhängig ist, oder einer zwei einen Kondensator bildenden, Leiter tragenden Kapazitätsfolie, wobei die Leiterfolie bandartig ausgebildet und durch an zumindest einer ihrer Längskanten angreifende Halteelemente an ihren beiden Oberflächen von der Flüssigkeit umspülbar in dem Schutzrohr gehalten ist, wobei die Leiterfolie über ihre Länge verteilt radiale Einschnitte hat und um ihre Längsachse verdrillt in den Halteelementen des Schutzrohres gehalten ist.

Behälter, in denen ein Flüssigkeitsniveau gemessen werden muß, sind oft recht unregelmäßig geformt. Kraftfahrzeugtanks haben häufig sehr komplizierte Formen, um den vorhandenen Platz optimal auszunutzen und ein möglichst großes Tankvolumen zu ermöglichen. Solche Behälterausbildungen schließen es oft aus, daß die Einrichtung zum elektrischen Messen des Flüssigkeitsniveaus gradlinig bis zur tiefsten Behälterstelle verlaufen kann. Es ist dann erforderlich, das Schutzrohr mit der Leiterfolie stärker zu verbiegen, damit es der Behälterkonstruktion folgen kann. Aus der DE-A-31 08 969 ist eine Einrichtung der eingangs genannten Art bekannt, bei der zwar die Leiterfolie verbiegbar ausgebildet ist. Da aber das Schutzrohr relativ starr ist, ist sie nicht in kompliziert geformten Behältern anwendbar.

Der Erfindung liegt die Aufgabe zugrunde, eine Einrichtung der eingangs genannten Art so weiter zu entwickeln, daß ein radiales Verbiegen des Schutzrohres mit eingebauter Leiterfolie in allen radialen Richtungen in möglichst großem Maße möglich wird.

Diese Aufgabe wird erfindungsgemäß dadurch gelöst, daß das Schutzrohr ein Wellrohr ist und die Halteelemente durch jeweils eine Unterbrechung einer Wellung des Wellrohres erzeugt sind, indem zwischen Beginn und Ende einer Wellung ein mindestens der Dicke der Leiterfolie entsprechender Wandabschnitt der Innenwelle zum Durchmesser oder Außenwelle herangezogen ist.

Durch die Einschnitte und die verdrillte Anordnung der Leiterfolie kann diese nach allen Richtungen verbogen werden, ohne daß es zu einen Knittern oder Reißen der Leiterfolie kommt. Die gute Biegbarkeit des Schutzrohres bei Beibehaltung seiner Querschnittsform wird durch die Ausbildung als Wellrohr erreicht. Dadurch vermag die erfindungsgemäße Einrichtung durch Biegen sich auch komplizierten Behälterformen anzupassen, so daß sie zuverlässig in schwer zugängliche, die tiefste Behälterstelle bildende Behälterbereiche zu gelangen vermag.

Bei ihm kann es sich um ein durch Extrusion billig herstellbares Kunststoffteil handeln.

Eine andere Möglichkeit zur Lösung der Aufgabe besteht darin, daß das Schutzrohr ein Wellrohr ist und die Halteelemente durch axiale Schlitze in den Wellungen des Wellrohres erzeugt sind, deren Breite der Diode der Leiterfolie entspricht.

Die Schlitze werden durch die Leiterfolie nach dem Einbau der Leiterfolie wieder weitgehend verschlossen, so daß keine größeren Öffnungen im Schutzrohr verbleiben, durch die es zu einem unerwünscht starken Flüssigkeitsaustausch zwischen dem Inneren des Schutzrohres und dem übrigen Behälter, in dem das Flüssigkeitsniveau gemessen werden soll, kommt.

Eine weitere besonders billig herstellbare Lösungsmöglichkeit der Aufgabe besteht darin, daß das Schutzrohr ein Wellrohr ist und die Halteelemente jeweils durch von den Wellungen des Wellrohres radial nach innen gerichtete Wülste erzeugt sind, zwischen denen ein mindestens der Dicke der Leiterfolie entsprechender Freiraum gebildet ist.

Eine einfache Möglichkeit bei der Montage der Leiterfolie die gewünschte Verdrillung zu erreichen besteht darin, daß die Haltelemente im Schutzrohr entlang einer Schraubenlinie vorgesehen sind.

Die Leiterfolie kann besonders exakt und fest im Schutzrohr gehalten werden, wenn die Halteelemente im Schutzrohr entlang zweier um 180 Grad zueinander versetzt verlaufenden Schraubenlinien vorgesehen sind, so daß die Leiterfolie an beiden Längskanten gehalten und geführt wird.

Sind die durch die Einschnitte gebildeten Folienabschnitte zwischen zwei Einschnitten jeweils durch mindestens ein Halteelement gehalten, wird der Einbau der Leiterfolie in das Schutzrohr besonders einfach, indem die Leiterfolie einfach von der Stirnseite her eingeschoben werden kann.

Statt die Halteelemente auf einer Schraubenlinie anzuordnen, können sie auch in mehreren Reihen fluchtend zueinander vorgesehen werden, wie das im Anspruch 8 angegeben ist. Auch diese Ausführungsform ermöglicht eine maschinelle Montage der Leiterfolie, indem die einzelnen Folienabschnitte vor dem Einschieben jeweils um den erforderlichen Winkel verschwenkt werden.

Die Erfindung läßt zahlreiche Ausführungsmöglichkeiten zu. Zwei davon sind zur Verdeutlichung des Erfindunosgedankens schematisch in der Zeichnung dargestellt und werden nachfolgend beschrieben. Es zeigen

Figur 1 ein teilweise geschnitten, teilweise in Ansicht dargestelltes Schutzrohr mit teilweise montierter Leiterfolie der erfindungsgemäßen Einrichtung,

Figur 2 eine Ansicht von oben auf die Anordnung gemäß Figur 1,

Figur 3 einen Längsschnitt durch einen Teil einer zweiten Ausführungsform eines erfindungsgemäß gestelteten Schutzrohres,

Figur 4 eine Draufsicht auf das Schutzrohr gemäß Figur 3.

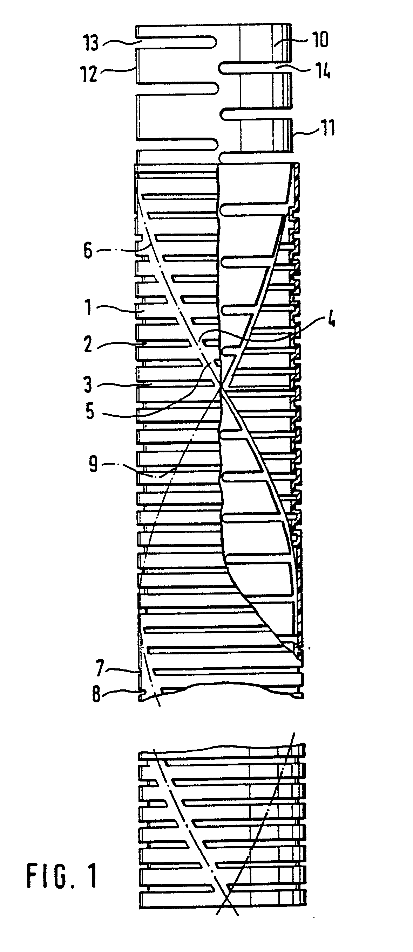

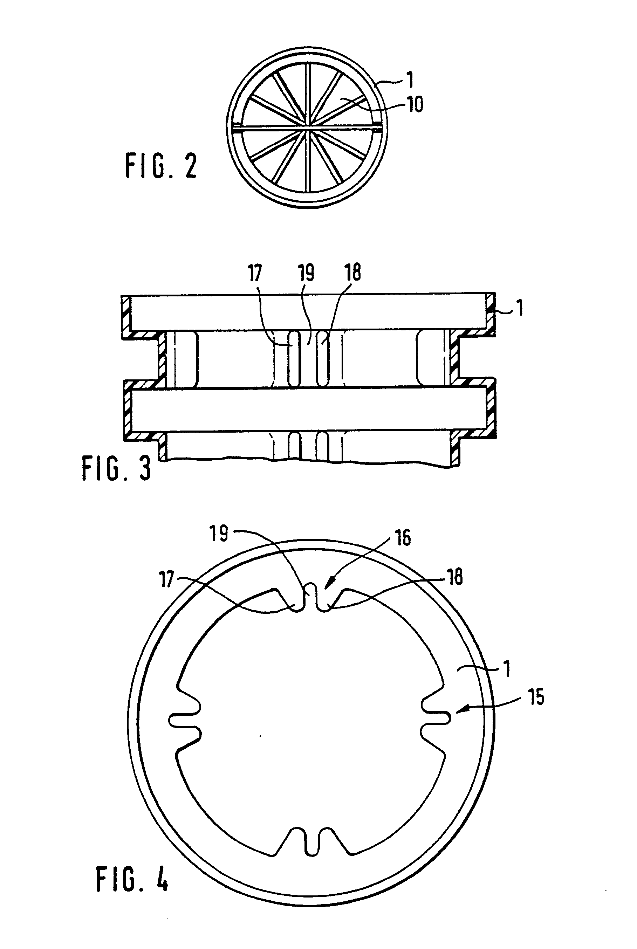

Die Figuren 1 und 2 zeigen ein Schutzrohr 1, welches in Figur 1 teilweise im Schnitt, teilweise als Ansicht dergestellt ist. Bei dem Schutzrohr 1 handelt es sich um ein Wellrohr mit nach innen gerichteten Wellungen, wie zum Beispiel 2, 3. Diese Wellungen 2, 3 laufen nicht vollständig um sie weisen vielmehr jeweils eine Unterbrechung 4, 5 auf. Von Wellung 2 zu Wellung 3 sind diese Unterbrechungen 4, 5 im gleichen Drehsinn versetzt, so daß alle Unterbrechungen 4, 5 auf einer Schraubenlinie 6 liegen. 180 Grad versetzt zu den Unterbrechungen 4, 5 sind weitere Unterbrechungen, zum Beispiel 7, 8 der Wellungen auf einer Schraubenlinie vorgesehen.

Alle Unterbrechungen stellen Halteelemente für eine Leiterfolie 10 dar und haltern die beiden Längskanten 11, 12 dieser Leiterfolie 10. Um ein Verbiegen der Leiterfolie 10 in alle radialen Richtungen zu ermöglichen, sind von beiden Längskanten 11, 12 her in die Leiterfolie 10 Einschnitte 13, 14 vorgesehen, die his zur Mitte der Leiterfolie 10 reichen. Zur Montage wird die Leiterfolie 10 von einer Seite des Schutzrohres 1 her derart in das Schutzrohr 1 eingeschoben, daß die Längskanten 11, 12 entlang der Schraubenlinien 6, 9 durch die Unterbrechungen 4, 5, 7, 8 der Wellungen 2, 3 rutscht. Dadurch wird die Leiterfolie in sich verdrillt und von den Anfängen und Enden der Wellungen 2, 3 im Bereich der Unterbrechungen 4, 5, 7, 8 gehalten. Figur 2 läßt erkennen, daß die durch die Einschnitte 13, 14 gebildeten Folienabschnitte mit ihren Stirnseiten bei Montage der Leiterfolie 10 durch die schraubenlinienförmige Anordnung der Unterbrechungen 4, 5, 7, 8 speichenartig im Schutzrohr 1 verlaufen.

Bei der dargestellten Ausführungsform dienen die Unterbrechungen 4, 5, 7, 8 der Wellungen 3, 4 als Halteelemente für die Leiterfolie 10. Nicht dargestellt ist eine Ausführungsform, bei der die Wellungen umlaufen und an jeweils zwei gegenüberliegenden Stellen durch einen axialen Schlitz im Schutzrohr 1 unterbrochen sind. Diese Schlitze üben dann die gleiche Funktion aus wie die Unterbrechungen 4, 5, 7, 8 bei der beschriebenen Ausführungsform. Sie sind zu diesem Zweck geringfügig breiter als die Leiterfolie 10 dick ist und verlaufen ebenfalls auf zwei Schraubenlinien 6, 9.

Das in den Figuren 3 und 4 dargestellte Schutzrohr 1 ist ebenfalls als Wellrohr ausgebildet. In ihm sind vier gleichmäßig über den Innenumfang verteilte Reihen von fluchtend zueinander angeordneten Halteelementen, zum Beispiel 15, 16, vorgesehen. Jedes Halteelement 15, 16 besteht aus zwei Wülsten 17, 18, zwischen denen ein Freiraum 19 vorgesehen ist. Die Leiterfolie 10 ist für das Schutzrohr 1 genauso gestaltet wie bei der zuvor beschriebenen Ausführungsform. Bei Montage wird der erste durch einen Einschnitt 13 gebildete Folienbereich, zum Beispiel in den Freiraum des Halteelementes 16 eingeschoben. Der nächste Folienbereich wird dann um 90 Grad verdrillt und in das Halteelement 15 geschoben. Jeder weitere Folienbereich ist um 90 Grad zu verdrehen und in das im Uhrzeigersinn nächstfolgende Halteelement zu schieben, wobei die Leiterfolie immer um die Höhe eines Folienbereiches weiter in das Schutzrohr 1 geschoben wird.

**Patentansprüche**

1. Einrichtung zum elektrischen Messen des Niveaus einer in einem Behälter enthaltenen Flüssigkeit mit einer in die Flüssigkeit eingetauchten, von einem Schutzrohr (1) umschlossenen Leiterfolie (10), wie einer temperaturabhängigen, elektrisch fremd beheizten Widerstandsfolie, deren von einer Auswertschaltung erfaßbarer Gesamtwiderstand von dem Flüssigkeitsniveau in dem Behälter abhängig ist, oder einer zwei einen Kondensator bildenden Leiter tragenden Kapazitätsfolie, wobei die Leiterfolie bandartig ausgebildet und durch an zumindest einer ihrer Längskanten angreifende Halteelemente an ihren beiden Oberflächen von der Flüssigkeit umspülbar in dem Schutzrohr gehalten ist, wobei die Leiterfolie über ihre Länge verteilt radiale Einschnitte (13, 14) hat und um ihre Längsachse verdrillt in den Halteelementen des Schutzrohres gehalten ist, dadurch gekennzeichnet, daß das Schutzrohr (1) ein Wellrohr ist und die Halteelemente durch jeweils eine Unterbrechung (4, 5, 7, 8) einer Wellung (2, 3) des Wellrohres erzeugt sind, indem zwischen Beginn und Ende einer Wellung (2, 3) ein mindestens der Dicke der Leiterfolie (10) entsprechender Wandabschnitt der Innenwelle bis zum Durchmesser der Außenwelle herausgezogen ist.

2. Einrichtung zum elektrischen Messen des Niveaus einer in einem Behälter enthaltenen Flüssigkeit mit einer in die Flüssigkeit eingetauchten, von einem Schutzrohr (1) umschlossenen Leiterfolie (10), wie einer temperaturabhängigen, elektrisch fremd beheizten Widerstandsfolie, deren von einer Auswertschaltung erfaßbarer Gesamtwiderstand von dem Flüssigkeitsniveau in dem Behälter abhängig ist, oder einer zwei einen Kondensator bildenden Leiter tragenden Kapazitätsfolie, wobei die Leiterfolie bandartig ausgebildet und durch an zumindest einer ihrer Längskanten angreifende Halteelemente an ihren beiden Oberflächen von der Flüssigkeit umspülbar in dem Schutzrohr gehalten ist, wobei die Leiterfolie über ihre Länge verteilt radiale Einschnitte (13, 14) hat und um ihre Längsachse verdrillt in den Halteelementen des Schutzrohres gehalten ist, dadurch gekennzeichnet, daß das Schutzrohr (1) ein Wellrohr ist und die Halteelemente durch axiale Schlitze in den Wellungen (2, 3) des Wellrohres erzeugt sind, deren Breite der Dicke der Leiterfolie (10) entspricht.

3. Einrichtung zum elektrischen Messen des Niveaus einer in einem Behälter enthaltenen Flüssigkeit mit einer in die Flüssigkeit eingetauchten, von einem Schutzrohr (1) umschlossenen Leiterfolie (10), wie einer temperaturabhängigen, elektrisch fremd beheizten Widerstandsfolie, deren von einer Auswertschaltung erfaßbarer Gesamtwiderstand von dem Flüssigkeitsniveau in dem Behälter abhängig ist, oder einer zwei einen Kondensator bildenden Leiter tragenden Kapazitätsfolie, wobei die Leiterfolie bandartig ausgebildet und durch an zumindest einer ihrer Längskanten angreifende Halteelemente an ihren beiden Oberflächen von der Flüssigkeit umspülbar in dem Schutzrohr gehalten ist, wobei die Leiterfolie über ihre Länge verteilt radiale Einschnitte (13, 14) hat und um ihre Längsachse verdrillt in den Halteelementen des Schutzrohres gehalten ist, dadurch gekennzeichnet, daß das Schutzrohr (1) ein Wellrohr ist und die Halteelemente (15, 16) jeweils durch von den Wellungen des Wellrohres radial nach innen gerichtete Wülste (17, 18) erzeugt sind, zwischen denen ein mindestens der Dicke der Leiterfolie (10) entsprechender Freiraum (19) gebildet ist.

4. Einrichtung nach Anspruch 1, dadurch gekennzeichnet, daß die radialen Einschnitte (13, 14) bis zur Mitte der Leiterfolie (10) abwechselnd von beiden Längskanten (11, 12) der Leiterfolie (10) aus verlaufen.

5. Einrichtung nach einem der vorhergehenden Ansprüche, dadurch gekennzeichnet, daß die Halteelemente im Schutzrohr (1) entlang einer Schraubenlinie (6, 9) vorgesehen sind.

6. Einrichtung nach einem der vorhergehenden Ansprüche, dadurch gekennzeichnet, daß die Halteelemente im Schutzrohr (1) entlang zweier um 180 Grad zueinander versetzt verlaufender Schraubenlinien (6, 9) vorgesehen sind.

7. Einrichtung nach einem der vorhergehenden Ansprüche, dadurch gekennzeichnet, daß die durch die Einschnitte (13, 14) gebildeten Folienabschnitte zwischen zwei Einschnitten (13, 14) jeweils durch mindestens ein Halteelement (4, 5, 7, 8) gehalten sind.

8. Einrichtung nach einem der vorhergehenden Ansprüche, dadurch gekennzeichnet, daß die Halteelemente (15, 16) zueinander fluchtend in mehreren, über den Umfang des Schutzrohres (1) gleichmäßig verteilten Reihen vorgesehen sind, und daß die durch die Einschnitte (13, 14) in der Leiterfolie (10) gebildeten Folienbereiche von Folienbereich zu Folienbereich in das in einer Drehrichtung nächstfolgende und zugleich nächsttiefere Halteelement (15, 16) eingesetzt ist.

**Claims**

1. Device for the electrical measuring of the level of a liquid contained in a container with a conductor foil (10) which is immersed in the liquid and is surrounded by a protective tube (1), such as a temperature-dependent, electrically extraneously heated resistance foil, whose total resistance, detectable by an evaluation circuit, is dependent on the liquid level in the container, or a capacitance foil supporting two conductors forming a capacitor, the conductor foil being of band-form construction and being held by holding elements engaging on at least one of its longitudinal edges within the protective tube in such a way that the liquid can wash around both its surfaces, the conductor foil having radial incisions (13, 14) distributed over its length, and being held in a situation twisted about its longitudinal axis in the holding elements of the protective tube, characterised in that the protective tube (1) is a corrugated tube, and the holding elements are produced each by an interruption (4, 5, 7, 8) of a corrugation (2, 3) of the corrugated tube, in that between the beginning and end of a corrugation (2, 3) a wall portion of the inner corrugation, which portion corresponds at least to the thickness of the conductor foil (10), is taken out as far as the diameter of the outer corrugation.

2. Device for the electrical measuring of the level of a liquid contained in a container with a conductor foil (10) which is immersed in the liquid and is surrounded by a protective tube (1), such as a temperature-dependent, electrically extraneously heated resistance foil, whose total resistance, ascertainable by an evaluation circuit, is dependent on the liquid level in the container, or a capacitance foil supporting two conductors forming a capacitor, the conductor foil being of band-form construction and being held by holding elements engaging on at least one of its longitudinal edges within the protective tube in such a way that the liquid can wash around both its surfaces, the conductor foil having radial incisions (13, 14) distributed over its length, and being held in a situation twisted about its longitudinal axis in the holding elements of the protective tube, characterised in that the protective tube (1) is a corrugated tube, and the holding elements are produced by axial slots in the corrugations (2, 3) of the corrugated tube the width of which corresponds to the thickness of the conductor foil (10).

3. Device for the electrical measuring of the level of a liquid contained in a container with a conductor foil (10) which is immersed in the liquid and is surrounded by a protective tube (1), such as a temperature-dependent, electrically extraneously heated resistance foil, whose total resistance, ascertainable by an evaluation circuit, is dependent on the liquid level in the container, or a capacitance foil supporting two conductors forming a capacitor, the conductor foil being of band-form construction and being held by holding elements engaging on at least one of its longitudinal edges within the protective tube in such a way that the liquid can wash around both its surfaces, the conductor foil having radial incisions (13, 14) distributed over its length, and being held in a situation twisted about its longitudinal axis in the holding elements of the protective tube, characterised in that the protective tube (1) is a corrugated tube, and the holding elements (15, 16) are produced in each case by ridges (17, 18) which are directed radially inwardly from the corrugations of the corrugated tube and between which there is formed a free space (19) corresponding at least to the thickness of the conductor foil (10).

4. Device according to claim 1, characterised in that the radial incisions (13, 14) extend as far as the middle of the conductor foil (10) alternately from the two longitudinal edges (11, 12) of the conductor foil (10).

5. Device according to one of the preceding claims, characterised in that the holding elements are provided in the protective tube (1) along a helical line (6, 9).

6. Device according to one of the preceding claims, characterised in that the holding elements are arranged in the protective tube (1) along two helical lines (6, 9) situated offset relatively to one another through 180°.

7. Device according to one of the preceding claims, characterised in that the foil portions formed by the incisions (13, 14) are held by at least one holding element (4, 5, 7, 8) in each case between two incisions (13, 14).

8. Device according to one of the preceding claims, characterised in that the holding elements (15, 16) are provided, in alignment with one another, in a plurality of rows distributed uniformly over the circumference of the protective tube (1), and that the foil regions formed by the incisions (13, 14) in the conductor foil (10) are inserted, from foil region to foil region, into the holding element (15, 16) which follows next in one direction of rotation and which is at the same time the next lower.

**Revendications**

1. Dispositif pour mesurer électriquement le niveau d'un liquide contenu dans un récipient, à l'aide d'une feuille conductrice (10) entourée d'un tube protecteur (1) et plongée dans le liquide, comme une feuille formant résistance dépendant de la température et chauffée électriquement par un dispositif externe, feuille dont la résistance totale, pouvant être décelée par un circuit d'évaluation, dépend du niveau du liquide dans le récipient, ou bien comme l'une des deux feuilles formant un condensateur, portant une structure conductrice, cette feuille conductrice ayant la forme d'une bande et étant maintenue dans le tube protecteur, de façon à pouvoir être baignée par le liquide, à ses deux surfaces par au moins l'un des éléments de retenue serrant ses bords longitudinaux, la feuille conductrice comportant des encoches (13, 14) radiales réparties sur sa longueur et étant maintenue, torsadée autour de son axe longitudinal, dans les éléments de retenue équipant le tube protecteur, dispositif caractérisé en ce que le tube protecteur (1) est un tube ondulé et les éléments de retenue sont produits à chaque fois par une interruption (4, 5, 7, 8) d'une ondulation (2, 3) du tube ondulé, et, entre le début et la fin d'une ondulation (2, 3), un tronçon de la paroi de l'ondulation interne, correspondant au moins à l'épaisseur de la feuille conductrice (10), est tiré vers l'extérieur jusqu'au bout du diamètre de l'ondulation externe

2. Dispositif pour mesurer électriquement le niveau d'un liquide contenu dans un récipient, à l'aide d'une feuille conductrice (10), entourée d'un tube protecteur (1) et plongée dans le liquide, comme une feuille formant résistance dont la valeur dépend de la température et qui est chauffée électriquement par un dispositif externe, feuille dont la résistance totale, pouvant être décelée par un circuit d'évaluation, dépend du niveau du liquide dans le récipient, ou bien comme l'une des deux feuilles formant un condensateur portant une structure conductrice, cette feuille conductrice ayant la forme d'une bande et étant maintenue dans le tube protecteur, de façon à pouvoir être baignée par le liquide, à ses deux surfaces par au moins l'un des éléments de retenue serrant ces bords longitudinaux, la feuille conductrice comportant des encoches (13, 14) radiales réparties sur sa longueur et étant maintenue, torsadée autour de son axe longitudinal, dans les éléments de retenue équipant le tube protecteur, dispositif caractérisé en ce que le tube protecteur (1) est un tube ondulé et les éléments de retenue sont produits par des fentes axiales ménagées dans les ondulations (2, 3) du tube ondulé, fentes dont la largeur correspond à l'épaisseur de la feuille conductrice (10).

3. Dispositif pour mesurer électriquement le niveau d'un liquide contenu dans un récipient, à l'aide d'une feuille conductrice (10), entourée d'un tube protecteur (1) et plongée dans le liquide, comme une feuille formant résistance, dont la valeur dépend de la température et qui est chauffée électriquement par un dispositif externe, feuille dont la résistance totale, pouvant être décelée par un circuit d'évaluation, dépend du niveau du liquide dans le récipient, ou bien comme l'une des deux feuilles formant un condensateur, portant une structure conductrice, cette feuille conductrice ayant la forme d'une bande et étant maintenue dans le tube protecteur, de façon à pouvoir être baignée par le liquide, à ses deux surfaces par au moins l'un des éléments de retenue serrant ses bords longitudinaux, la feuille conductrice comportant des encoches (13, 14) radiales réparties sur sa longueur et étant maintenue, torsadée autour de son axe longitudinal, dans les éléments de retenue équipant le tube protecteur, dispositif caractérisé en ce que le tube protecteur est un tube ondulé et les éléments de retenue sont constitués à chaque fois par des renflements (17, 18) dirigés radialement vers l'intérieur, des ondulations du tube ondulé, entre lesquels il est formé un espace libre (19) correspondant au moins à l'épaisseur de la feuille conductrice (10).

4. Dispositif selon la revendication 1, caractérisé en ce que les encoches (13, 14) radiales sont disposées jusqu'au milieu de la feuille conductrice (10) en partant alternativement des deux bords longitudinaux (11, 12) de la feuille conductrice (10).

5. Dispositif selon l'une des revendications précédentes, caractérisé en ce que les éléments de retenue sont prévus dans le tube protecteur (1) le long d'une ligne hélicoïdale (6, 9).

6. Dispositif selon l'une des revendications précédentes, caractérisé en ce que les éléments de retenue sont prévus dans le tube protecteur (1) le long de deux lignes hélicoïdales (6, 9) mutuellement décalées de 180°.

7. Dispositif selon l'une des revendications précédentes, caractérisé en ce que les tronçons de feuille, formés par les encoches (13, 14) sont maintenus entre deux encoches (13, 14) chaque fois par au moins un élément de retenue (4, 5, 7, 8).

8. Dispositif selon l'une des revendications précédentes, caractérisé en ce que les éléments (15, 16) de retenue sont prévus mutuellement alignés en plusieurs rangées réparties uniformément à la périphérie du tube protecteur (1), et en ce que les zones formées dans la feuille conductrice (10) par les encoches (13, 14) sont introduites d'une zone de cette feuille vers la suivante dans l'élément (15, 16) de retenue placé immédiatement à la suite dans un sens de rotation et, en même temps, immédiatement plus à l'intérieur.

FIG. 1

FIG. 2

FIG. 3

FIG. 4